# EUROPÄISCHE PATENTANMELDUNG

(11) **EP 4 847 439 A2**
(43) Veröffentlichungstag der Anmeldung: **02.12.2026**
(21) Anmeldenummer: 26213061.0
(22) Anmeldetag: 07.04.2017
(51) Int. Cl.: B66C 13/40, G05B 19/042, B66C 13/46, B66C 13/08, B66C 13/30

(54) **BAUMASCHINE**

(30) Priorität: 08.04.2016 DE 202016002296 U
(62) Dokumentnummer(n) der früheren Anmeldung(en) nach Art. 76 EPÜ: 23199748.7 / 4 276 047; 17716791.3 / 3 408 209
(71) Anmelder: Liebherr-Werk Biberach GmbH, 88400 Biberach an der Riss (DE)
(72) Erfinder: PALBERG, Michael, 88499 Riedlingen (DE); RESCH, Jürgen, 88458 Degernau (DE); FENKER, Oliver, 88447 Warthausen (DE)
(74) Vertreter: Lorenz Seidler Gossel Part. mbB

(57) **Zusammenfassung**

Die vorliegende Erfindung betrifft eine Baumaschine, insbesondere in Form eines Krans, Seilbaggers und dergleichen, mit einer elektronischen Steuervorrichtung zum Steuern und/oder Erfassen von Betriebsparametern sowie zumindest einer Antriebseinrichtung zum Bewegen eines Funktionselements, insbesondere Lastaufnahmemittels. Erfindungsgemäß ist vorgesehen, das Funktionselement der Baumaschine dadurch in die gewünschte Richtung zu dirigieren, dass händisch Manipulationskräfte auf das Funktionselement oder ein daran befestigtes Bauteil ausgeübt werden oder das Funktionselement manuell in eine bestimmte Richtung bewegt wird, was dann von den Antrieben der Baumaschine unterstützt wird. Wird das Funktionselement händisch in eine bestimmte Richtung gedrückt oder gezogen und/oder verdreht oder wird dies zumindest versucht, werden diese Bewegungsversuche erfasst und in eine entsprechende Stellbewegung der Baumaschine umgesetzt.

## Beschreibung

Die vorliegende Erfindung betrifft eine Baumaschine, insbesondere in Form eines Krans, Seilbaggers und dergleichen, mit einer elektronischen Steuervorrichtung zum Steuern und/oder Erfassen von Betriebsparametern sowie zumindest einer Antriebseinrichtung zum Bewegen eines Funktionselements, insbesondere Lastaufnahmemittels.

Elektronisch gesteuerte Baumaschinen besitzen üblicherweise einen Steuerungsrechner, der diverse Funktionselemente wie Lasthaken, Werkzeuge oder Stellorgane, Antriebe oder Überwachungseinrichtungen ansteuern kann und/oder mit Sensoren, Überwachungsvorrichtungen oder anderen Erfassungsmitteln verbunden ist, um bestimmte Betriebsparameter zu erfassen und abzuspeichern. Hierbei können von dem Steuerungsrechner vorgegebene Steuerprogramme abgearbeitet und/oder von einem Maschinenbediener eingebbare Steuerbefehle ausgeführt werden, die der Steuerungsrechner zur Ansteuerung der entsprechenden Stellorgane bzw. Antriebe verwendet bzw. in eine entsprechende Datenverarbeitung umsetzt.

Um Steuerbefehle eingeben zu können oder umgekehrt überwachte Betriebsparameter anzeigen zu können, umfasst die Steuervorrichtung der Baumaschine dabei üblicherweise eine Bedientastatur, Stellhebel wie Joysticks, Befehlsschalter, ein Touchscreen oder andere ggf. extern anschließbare Eingabemittel sowie eine Anzeigevorrichtung beispielsweise in Form eines Bildschirms oder eine andere Datenausgabeeinrichtung, die mit dem genannten Steuerungsrechner verbunden werden können und entweder unmittelbar am Steuerstand vorgesehen oder auch an einer Fernsteuerung angebracht sein können.

Zusätzlich zu stationär angebrachten Ein- und/oder Ausgabegeräten, die eine Bedienung am Steuerstand selbst erlauben, ist bereits vorgeschlagen worden, ein mobiles Endgerät zu verwenden, das nach Art eines Tablets, einer Fernsteuereinheit oder eines Mobiltelefons ausgebildet ist und drahtlos mit dem Steuerungsrechner der Steuervorrichtung kommunizieren kann. Ein solches mobiles Endgerät erleichtert die Bedienung und Überwachung der Baumaschine beträchtlich. Dennoch gibt es bei Verwendung solcher mobiler Endgeräte bisweilen Beeinträchtigungen in der Handhabung. Beispielsweise kann der Maschinenführer beim Absteigen das Endgerät auf dem Steuerstand liegenlassen, so dass vom Endgerät abgegebene Überwachungsmeldungen nicht wahrgenommen werden oder erst zeitversetzt zur Kenntnis des Maschinenführers gelangen. Zum anderen kann es schwierig sein, gleichzeitig das Endgerät zu betätigen bzw. abzulesen und andere Tätigkeiten auszuführen, beispielsweise eine beidhändig vorzunehmende Maschinenbetätigung oder -handhabung wie das Anschlagen des Lasthakens oder das Verschieben eines Betonkübels auszuführen.

Hiervon ausgehend liegt der vorliegenden Erfindung die Aufgabe zugrunde, eine verbesserte Baumaschine der genannten Art zu schaffen, die Nachteile des Standes der Technik vermeidet und Letzteren in vorteilhafter Weise weiterbildet. Insbesondere soll eine einfach handzuhabende Steuerung und Überwachung der Maschine mit hohem Bedienungskomfort erreicht werden, die den Maschinenführer möglichst wenig von anderen Obliegenheiten wie Beobachten des Funktionselements und dergleichen ablenkt.

Erfindungsgemäß wird die genannte Aufgabe durch eine Baumaschine gemäß Anspruch 1 gelöst. Bevorzugte Ausgestaltungen der Erfindung sind Gegenstand der abhängigen Ansprüche.

Es wird also nach einem Aspekt der Erfindung vorgeschlagen, das Funktionselement der Baumaschine dadurch in die gewünschte Richtung zu dirigieren, dass händisch Manipulationskräfte auf das Funktionselement oder ein daran befestigtes Bauteil ausgeübt werden oder das Funktionselement manuell in eine bestimmte Richtung bewegt wird, was dann von den Antrieben der Baumaschine unterstützt wird. Wird das Funktionselement händisch in eine bestimmte Richtung gedrückt oder gezogen und/oder verdreht oder wird dies zumindest versucht, werden diese Bewegungsversuche erfasst und in eine entsprechende Stellbewegung der Baumaschine umgesetzt. Erfindungsgemäß ist eine Erfassungseinrichtung zum Erfassen von händisch ausgeführten Manipulationskräften und/oder -bewegungen vorgesehen, die auf das Funktionselement ausgeübt und/oder an dem Funktionselement ausgeführt werden, wobei die Steuervorrichtung der Baumaschine dazu ausgebildet ist, die zumindest eine Antriebseinrichtung zum Bewegen des Funktionselements in Abhängigkeit der erfassten Manipulationskraft und/oder -bewegung anzusteuern.

Die genannte Erfassungseinrichtung ist dabei insbesondere auch dazu ausgebildet, die Richtung der händisch ausgeführten Manipulationskräfte und/oder -bewegungen zu erfassen, so dass die Steuervorrichtung die genannte Antriebseinrichtung so ansteuern kann, dass das Funktionselement in die entsprechende Richtung bewegt wird und die von der Antriebseinrichtung veranlasste Bewegungsrichtung der Richtung des händischen Manipulationsversuchs zumindest im Wesentlichen entspricht.

Alternativ oder zusätzlich kann die genannte Erfassungseinrichtung auch dazu ausgebildet sein, die betragsmäßige Stärke oder Größe der händisch ausgeführten Manipulationskraft und/oder -bewegung zu erfassen, wobei die Steuervorrichtung die Geschwindigkeit und/oder die Beschleunigung und/oder den Stellweg der motorisch erzeugten Antriebsbewegung des Funktionselements daran anpassen kann. Wird beispielsweise der Lasthaken eines Krans oder ein daran befestigtes Bauteil stärker oder weiter in eine Richtung gedrückt oder gezogen und/oder verdreht, kann die Steuervorrichtung eine entsprechende Antriebsbewegung zum Verfahren des Lasthakens schneller oder vom Stellweg her weiter ausführen. Umgekehrt kann eine feinere händische Manipulation in eine feinere, kleinere motorische Manipulation umgesetzt werden.

Eine solche Umsetzung eines händischen Manipulationsversuchs des Funktionselements der Baumaschine bzw. eines davon aufgenommenen Bauteils in eine entsprechende motorische Manipulation des Funktionselements erlaubt ein besonders einfaches, intuitives Dirigieren der Baumaschine und ihres Funktionselements und gibt dem Maschinenbediener das Gefühl, das Funktionselement der Baumaschine und ein ggf. daran aufgenommenes Bauteil mühe- und kraftlos in die gewünschte Richtung schieben, ziehen und/oder drehen zu können, obwohl die üblicherweise von Baumaschinen bearbeiteten bzw. zu verbringenden Bauteile hohe Gewichte besitzen.

Die von der Erfassungseinrichtung erfasste händische Manipulationskraft und/oder -bewegung muss dabei nicht direkt auf das Funktionselement oder ein davon aufgenommenes Bauteil ausgeübt werden, sondern es kann auch vorgesehen sein, dass die Erfassungseinrichtung eine am Funktionselement ausgeführte Manipulationsbewegung, beispielsweise eine Handbewegung im Sinne eines Aufwärts- oder Abwärtswinkens erfasst und als Steuerbefehl interpretiert, der dann von der Steuervorrichtung der Baumaschine in eine entsprechende Stellbewegung der Antriebseinrichtung umgesetzt wird. Eine solche Ausbildung der Erfassungseinrichtung erlaubt eine Gestensteuerung der Baumaschine und ihres Funktionselements, wie noch näher erläutert wird.

Die genannte Erfassungseinrichtung kann dabei grundsätzlich verschieden ausgebildet sein. Ist beispielsweise die Baumaschine als Kran oder Seilbagger ausgebildet bzw. das Funktionselement pendelnd aufgehängt - wie beispielsweise der Lasthaken eines Krans an dessen Hubseil oder der Greifer eines Seilbaggers an dessen Seil - , kann die Erfassungseinrichtung in Weiterbildung der Erfindung Bestimmungsmittel zum Bestimmen einer Auslenkung des pendelnd aufgehängten Funktionselements gegenüber einer Vertikalen, die durch den Aufhängungspunkt der pendelnden Aufhängung gehen kann, aufweisen. Vorteilhafterweise kann die Steuervorrichtung hierbei dazu ausgebildet sein, die zumindest eine Antriebseinrichtung in Abhängigkeit der erfassten Auslenkung anzusteuern, insbesondere derart, dass die von der Antriebseinrichtung veranlasste Stellbewegung eines Baumaschinenelements die erfasste Auslenkung zu kompensieren versucht. Wird beispielsweise bei einem Kran ein Schrägzug des Hubseils bzw. des daran befestigten Lasthakens erfasst, der beispielsweise vom Kranturm weg in Richtung des Auslegers nach vorne geht, kann die Steuervorrichtung die Laufkatze am Ausleger weiter nach vorne verfahren, um den Schrägzug zu kompensieren. Wird beispielsweise ein Schrägzug des Lasthakens quer zu einer vertikalen Ebene durch den Ausleger erfasst, kann die Steuervorrichtung das Drehwerk des Krans betätigen, um den Ausleger wieder vertikal über den Lasthaken zu drehen.

Die genannte Bestimmung von Auslenkungen des pendelnd aufgehängten Funktionselements kann dabei in verschiedener Weise bewerkstelligt werden, beispielsweise dadurch, dass dem Hubseil ein Neigungssensor zugeordnet wird. Vorteilhafterweise können die Bestimmungsmittel zum Bestimmen der Auslenkung gegenüber der Vertikalen auch zumindest einen bildgebenden Sensor, insbesondere eine Kamera, umfassen, dessen/deren Blickrichtung vorteilhafterweise senkrecht nach unten und zumindest näherungsweise koaxial zu einer Vertikalen durch den Aufhängungspunkt gehen kann, so dass Auslenkungen des pendelnd aufgehängten Funktionselements dazu führen, dass die bildliche Darstellung des Funktionselements, beispielsweise des Lasthakens eines Krans, aus dem Bildzentrum herauswandert. Mittels einer Bildauswerteeinrichtung kann das von dem bildgebenden Sensor bzw. der Kamera bereitgestellte Bild hinsichtlich der Exzentrizität des Bildbestandteils, der das Funktionselement oder eine damit verbundene Markierung wiedergibt, ausgewertet werden, woraus dann die Steuervorrichtung einen entsprechenden Steuerbefehl für die zumindest eine Antriebsrichtung generieren kann.

In der zuvor genannten Weise können dabei die Richtung der Auslenkung und/oder die Stärke der Auslenkung berücksichtigt werden, um die Richtung und/oder Beschleunigung und/oder Stärke bzw. Größe der motorisch veranlassten Stellbewegung anzupassen.

Alternativ oder zusätzlich zu einer solchen Bestimmung der durch händische Manipulationskräfte und/oder -bewegungen verursachten Auslenkung des Funktionselements kann die vorgenannte Erfassungseinrichtung auch ein am Funktionselement der Baumaschine und/oder an einem daran aufgenommenen Bauteil andockbares Steuermodul besitzen, welches zumindest ein Bedienelement zum Eingeben von Steuerungsbefehlen aufweisen kann, in Abhängigkeit derer das Funktionselement von der Steuereinrichtung dann verfahren wird.

Um eine intuitive Bedienung zu ermöglichen, kann das genannte, zumindest eine Bedienelement des Verfahr-Steuer-Moduls Bewegungsachsen aufweisen, die mit den Verfahrachsen des Funktionselements der Baumaschine zusammenfallen bzw. diesen zumindest näherungsweise entsprechen. Insbesondere kann ein Bewegen des Bedienelements in eine bestimmte Richtung ein Verfahren der Baumaschine bzw. dessen Funktionselements in die entsprechende Richtung bewirken und/oder ein Verdrehen des Bedienelements um eine Drehachse in ein Verdrehen des Funktionselements um eine dazu parallele Drehachse in entsprechender Richtung umgesetzt werden.

Das Bedienelement des andockbaren oder fest am zu verfahrenden Funktionselement installierten Steuermoduls kann beispielsweise ein Joystick sein, der in verschiedene Achsen kippbar ist, um Verfahrbewegungen in die entsprechenden Richtungen zu erzeugen und/oder verdrehbar ist, um ein Verdrehen des Bauteils zu ermöglichen, wie dies zuvor beschrieben wurde. Alternativ oder zusätzlich können Schieber- und/oder Drucktasten und/oder ein Touchscreen, auf dem Fingerbewegungen in bestimmte Richtungen oder Drehungen erfasst werden können, als Bedienelement Verwendung finden, beispielsweise am Lasthaken angebracht sein oder einem daran andockbaren Steuermodul vorgesehen sein.

Vorteilhafterweise ist dieses Verfahr-Steuerungs-Modul bzw. dessen zumindest ein Bedienelement nicht in der Maschinenführerkabine vorgesehen - wo natürlich auch entsprechende Verfahrsteuermittel vorgesehen sein können - , sondern in unmittelbarer Nähe des zu verfahrenden Funktionselements der Baumaschine, beispielsweise unmittelbar am Lasthaken bzw. der den Lasthaken tragenden Umlenkflasche eines Krans. Beispielsweise können am Lasthaken oder einem damit verbundenen Strukturteil auf dessen vier Seiten jeweils Drucktasten angebracht sein, die bei Drücken eine Verfahrbewegung in Richtung der Druckbewegung auslösen, wodurch eine intuitive Feinjustierung der Ausrichtung bzw. Position des Lasthakens ermöglicht wird. Alternativ oder zusätzlich kann ein um eine aufrechte Achse verdrehbarer Drehsteuerungsknopf vorgesehen sein, mittels dessen der Lasthaken oder die Laufkatze mittels einer geeigneten Drehvorrichtung um die aufrechte Achse verdreht werden kann, um einen gewünschten Richtungswinkel einstellen zu können.

Alternativ oder zusätzlich zu einem solchen Feinjustierungs-Positionssteuerungsmodul direkt am Lastaufnahmemittel oder dem daran befestigten Bauteil kann das genannte Verfahr-Steuerungs-Modul auch in Form einer mobilen Steuerungseinheit beispielsweise in Form eines Tablets oder einer Joystick-Einheit und/oder einer Kombination hieraus realisiert sein, das/die ein am zu dirigierenden Funktionselement befindlicher Maschinenführer mit sich führen kann. Die Orientierung der am Tablet oder Joystick definierten Steuerungsachsen kann mit den Bewegungsachsen der Baumaschine beispielsweise ganz einfach dadurch in Übereinstimmung gebracht werden, dass sich der Maschinenführer selbst bzw. das Tablet oder die Joystick-Einheit in eine vorbestimmte Ausrichtung zur Baumaschine bringt, beispielsweise sich selbst mit dem Rücken zum Kranturm unter dessen Ausleger und/oder das Tablet in eine bestimmte Ausrichtung zum Ausleger des Krans und/oder sich selbst oder das Tablet in eine bestimmte Ausrichtung zu dem Bauwerk, das zu errichten ist und dessen Ausrichtung das Bauwerkdatenmodell natürlich kennt.

Alternativ oder zusätzlich kann das Steuermodul auch an dem zu verfahrenden Bauteil angebracht werden, dessen Position und Ausrichtung letztlich gesteuert werden soll, beispielsweise durch magnetische Befestigungsmittel, Saugnäpfe, Rasthalter oder ähnliches. Beispielsweise kann ein entsprechendes Steuerungstablet oder eine Joystick-Einheit zur Feinjustierung an einem gekennzeichneten Montagepunkt am Bauteil positioniert werden, um in der genannten Weise die Feinjustierung bzw. -positionierung vornehmen zu können.

Ein beispielsweise temporäres Anbringen des Verfahr-Steuer-Moduls an dem zu justierenden Bauteil und/oder dem das Bauteil aufnehmenden Lastaufnahmemittel in einer vorbestimmten Ausrichtung hierzu, was beispielsweise durch eine Halterung am Bauteil und/oder Lastaufnahmemittel und/oder eine daran angebrachte Markierung erfolgen kann, ist es gleichzeitig möglich, die Orientierungsachsen des Bedienelements des Verfahr-Steuer-Moduls in passender Weise mit den Bewegungsachsen der Baumaschine zu verknüpfen, da das temporäre Anbringen in vorbestimmter Ausrichtung die Bewegungsachsen des Bedienelements festlegt und eine intuitive Bedienung ermöglicht. Wird beispielsweise ein Tablet oder eine Joystick-Einheit oder ähnliches in vorbestimmter Ausrichtung an einer Hauptfläche einer Fertigwand positioniert, erkennt die Kransteuerung beispielsweise mittels einer geeigneten Sensorik die Ausrichtung der Wand, so dass das Drücken von Rechts-Links-Oben-Unten-Pfeilen oder eine entsprechende Wischbewegung auf dem Tablet oder ein Bewegen des Joysticks in eine Stellbewegung des Krans in die gewünschte Richtung umgesetzt werden kann. Bei Anbringen am Funktionsteil selbst, beispielsweise an einer vorbestimmten Hauptseite eines Lasthaken oder der Lasthakenflasche, weiß die Steuerung des Krans die Ausrichtung des Verfahr-Steuer-Moduls, da bestimmungsgemäß die Lasthakenausrichtung bekannt ist.

Alternativ oder zusätzlich kann ein vom Funktionselement der Baumaschine anzufahrender Zielpunkt auch mittels eines Laserpointers markiert werden. Die Steuervorrichtung der Baumaschine bzw. deren Erfassungsvorrichtung kann hierzu ein geeignetes, insbesondere optisches Erfassungsmittel zum Erfassen des vom Laserpointer erzeugten Laserlichtpunkts aufweisen, wobei die genannte Erfassungseinrichtung vorteilhafterweise derart ausgebildet ist, dass die Position des Laserlichtpunkts und/oder dessen Ortskoordinaten bestimmt werden können, und zwar vorteilhafterweise in einem dreidimensionalen Koordinatensystem. Insbesondere kann die Position des Laserlichtpunkts in einem baumaschinenbezogenen Koordinatensystem identifiziert werden, beispielsweise mittels einer am Kran montierbaren bildgebenden Sensorik. In Abhängigkeit des erfassten Laserlichtpunkts und dessen Position kann die Steuervorrichtung die Baumaschine dann so ansteuern, dass deren Funktionselement den Laserlichtpunkt anfährt.

In vorteilhafter Weiterbildung der Erfindung kann das genannte Verfahr-Steuerungs-Modul zur Feinpositionierung der jeweils aufgenommenen Last drahtlos mit der Steuervorrichtung der Baumaschine kommunizieren, wobei beispielsweise eine Funkübertragung der Steuerungssignale vorgesehen sein kann. Alternativ kann aber auch eine Signalkabelübertragung der Steuersignale erfolgen, beispielsweise über das Hubseil, an dem der Lasthaken eines Krans befestigt ist.

Gemäß einem anderen Aspekt der vorliegenden Erfindung kann vorgesehen sein, den zumindest einen mobilen Elektronikbaustein der Steuervorrichtung als sogenannten "Wearable"-Baustein auszubilden, der ohne von einer Hand gegriffen werden zu müssen am menschlichen Körper angebracht ist und getragen wird. Dabei kann der mobile Elektronikbaustein Eingabemittel zum Eingeben von Steuerbefehlen an einen Steuerungsrechner der Steuervorrichtung besitzen und in ein bestimmungsgemäß am Körper des Maschinenbedieners zu tragendes Funktionsteil integriert sein, das an den menschlichen Körper formangepasste Befestigungsmittel zum Befestigen an einem Körperglied aufweist. Das Funktionsteil bildet ein Anziehsachenteil, das der Maschinenbediener an einem seiner Körperglieder anzieht, wodurch der Elektronikbaustein automatisch am Körper getragen wird. Der Elektronikbaustein ist ohne aktives Zutun oder Greifen des Maschinenbedieners an dessen Körper tragbar, ohne die Bewegungsfreiheit der Hände, Arme und Beine des Maschinenbedieners zu beeinträchtigen, so dass der Maschinenbediener zwar den Elektronikbaustein der Steuervorrichtung permanent am Körper trägt, gleichzeitig trotzdem aber Hände, Arme und Beine frei hat, um andere Handhabungsaufgaben wie das Anschlagen eines Lasthakens, das Dirigieren eines Betonkübels beim Betonieren oder anderes auszuführen. Dabei kann der Maschinenführer über das am Körper getragene Anziehsachenteil Steuerbefehle an den Steuerungsrechner der Steuervorrichtung der Baumaschine eingeben, ohne dass der Maschinenführer zunächst den passenden Steuerhebel am Maschinenführerstand suchen müsste. Alternativ oder zusätzlich kann der Elektronikbaustein dem Maschinenführer auch Informationen anzeigen, die den Betrieb der Maschine betreffen. Beides ist insbesondere hilfreich, wenn sich der Maschinenführer beispielsweise im Steuerstand vom Cockpit weggedreht und dessen Steuerhebel nicht mehr vor ihm liegen oder er sich am Funktionselement von diesem weggedreht hat, und erlaubt ein rasches Reagieren in kritischen Situationen.

Der bestimmungsgemäß am Körper zu tragende Funktionsteil, in den der genannte Elektronikbaustein integriert ist, kann dabei unabhängig von der Funktion des Elektronikbausteins weitere Funktionen ausführen bzw. erfüllen, insbesondere den Körper des Maschinenbedieners schützen, bedecken, warm halten oder verhüllen.

Insbesondere kann der genannte mobile Elektronikbaustein in ein Kleidungsstück wie beispielsweise Jacke oder Hose integriert sein. Beispielsweise kann der Elektronikbaustein in ein Kleidungsstück eingewebt, eingenäht oder in anderer

Weise daran permanent befestigt sein, so dass das vom Maschinenbediener angezogene Kleidungsstück den Elektronikbaustein trägt und mit sich führt.

Vorzugsweise kann der mobile Elektronikbaustein der Steuerungsvorrichtung in einen Handschuh integriert sein.

Die Integration des mobilen Elektronikbausteins in einen Handschuh erlaubt es, auf vielfältige Weise Steuerbefehle an den Steuerungsrechner einzugeben. Beispielsweise können die Eingabemittel zum Eingeben solcher Steuerbefehle zumindest einen Piezosensor umfassen, der in den Handschuh integriert sein kann, um durch Drücken und/oder Biegen und/oder Ziehen des Piezoelements einen Steuerbefehl erzeugen zu können, beispielsweise durch Ballen einer Faust und/oder Auseinanderspreizen der den Handschuh tragenden Finger und/oder Aneinanderdrücken zweier Fingerkuppen, denen das Piezoelement zugeordnet ist. Mittels eines solchen Piezosensors kann beispielsweise aber auch erfasst werden, wenn die den Handschuh tragende Hand des Maschinenführers einen Steuerknüppel beispielsweise in Form eines Joysticks plötzlich fest drückt, woraus beispielsweise geschlossen werden kann, dass eine Gefahrensituation vorliegt, aufgrund derer dann entsprechende Steuerungsreaktionen, beispielsweise das Abbremsen einer Stellbewegung der Baumaschine eingeleitet werden können.

Wie zuvor bezüglich der Variante des Tablets erläutert, kann die Richtung eines Druck- oder Bewegungsbefehls des Handschuhs dabei beispielsweise dadurch erfaßt bzw. bestimmt werden, dass der Handschuh an eine vorbestimmten Stelle des Bauteils angelegt wird, beispielsweise einer Frontseite der zu versetzenden Fertigwand, dessen/deren Ausrichtung die Baumaschinen-Steuervorrichtung kennt oder mittels einer geeigneten Sensorik, beispielsweise mittels einer vom Kranausleger nach unten blickenden Kamera, erfaßt. Kennt die Steuerungsvorrichtung die Ausrichtung des Bauteils oder des Lastaufnahmemittels, an das der Handschuh angelegt wird, kennt die Steuerungsvorrichtung auch die Ausrichtung des Handschuhs.

Alternativ oder zusätzlich wäre es aber auch möglich, die Orientierung des Handschuhs mittels einer geeigneten Sensorik zu erfassen, bspw. mittels Gyroskopsensoren und/oder Kompasselementen und/oder Neigungssensoren und/oder GPS-Modulen etc., um bestimmte Drucksignale der in den Handschuh integrierten Sensoren in bestimmten Bewegungsrichtungen der zu erzeugenden Stellbewegung zuzuordnen.

Ein solcher Handschuh kann auch mehrere Sensoren, beispielsweise Drucksensoren umfassen, denen verschiedene Bewegungsrichtungen und/oder Steuerfunktionen zugeordnet sind, so dass beispielsweise durch Drücken des an einem Zeigefinger angebrachten Sensors eine andere Verfahrbewegung eingeleitet werden kann als durch das Drücken eines Handflächensensors.

Alternativ oder zusätzlich zu einem solchen Piezoelement können die Eingabemittel zum Eingeben von Steuerbefehlen auch einen Beschleunigungs- und/oder Ausrichtungssensor umfassen, mittels dessen Bewegungen des den Elektronikbaustein tragenden Körperglieds erfasst werden können. Insbesondere können Handbewegungen erfasst werden, wenn der genannte Beschleunigungs- und/oder Ausrichtungssensor in einen Handschuh integriert ist. Mittels eines solchen Beschleunigungs- und/oder Ausrichtungssensors kann insbesondere eine Gestensteuerung realisiert werden. Werden bestimmte Körpergliedbewegungen erfasst, deren Beschleunigung und/oder Geschwindigkeit ein bestimmtes Maß erreichen oder überschreiten und/oder deren Richtung in eine bestimmte Raumrichtung geht, können entsprechende Steuerbefehle an den Steuerungsrechner der Baumaschine übermittelt werden.

Insbesondere kann der Elektronikbaustein dabei derart ausgebildet sein, dass es zwischen den Richtungen der Körpergliedbewegungen und entsprechenden Stellbewegungen eines Arbeitsaggregats eine Korrelation gibt, insbesondere dahingehend, dass beispielsweise eine aufwärtsgerichtete Bewegung des Elektronikbausteins in eine aufwärtsgerichtete Bewegung des Funktionselements, insbesondere des Lasthakens oder Baggerwerkzeugs, und/oder eine abwärtsgerichtete Bewegung des Elektronikbausteins in eine abwärtsgerichtete Bewegung des Funktionselements umgesetzt wird.

Wird beispielsweise bei Integration des genannten Elektronikbausteins in einen Handschuh die Hand ruckartig nach oben bewegt, sodass eine Beschleunigung und/oder Geschwindigkeit in näherungsweise vertikaler Richtung eine bestimmte Größe erreicht, kann beispielsweise der Lasthaken eines Krans angehoben werden. Umgekehrt können bei abwärtsgehenden Handbewegungen, die eine entsprechende Geschwindigkeit und/oder Beschleunigung nach unten besitzen, in ein Absenken des Arbeitsaggregats umgesetzt werden.

Auch wenn die zuvor beschriebenen Eingabemittel in Form eines Piezoelements, eines Beschleunigungs- und/oder Ausrichtungs- und/oder Lagesensors, im Zusammenhang mit einem Handschuh beschrieben worden sind, können diese Eingabemittel auch anderen Kleidungsstücken oder anderen am Körper tragbaren Accessoire-Teilen zugeordnet werden bzw. darin integriert sein.

Alternativ oder zusätzlich könnten bestimmte Handbewegungen auch in anderer Weise erfasst werden, beispielsweise durch eine optische Erfassungseinrichtung, die beispielsweise im Cockpit oder Steuerstand der Baumaschine angebracht sein könnte und auf die üblicherweise am Lenkrad oder den Hauptsteuerhebeln ruhenden Hände eines Maschinenführers gerichtet sein könnte.

Alternativ oder zusätzlich kann eine solche optische Erfassungseinrichtung zum Erfassen von Handbewegungen oder anderen Körpergliedbewegungen auch an dem zu dirigierenden Funktionselement oder dem daran andockbaren Verfahr-Steuer-Modul vorgesehen sein, um die Gestensteuerung der genannten Art nicht nur im Cockpit des Führerstands, sondern auch unmittelbar am zu dirigierenden Funktionselement zu ermöglichen.

Die genannte optische Erfassungseinrichtung und/oder eine ihr nachgeordnete Bildauswerteeinrichtung der Gestensteuervorrichtung können hierbei vorteilhafterweise dazu konfiguriert sein, vorbestimmte Handzeichen und/oder Körpergliedzeichen, die beispielsweise mit einer bestimmten Körperhaltung einhergehen können und/oder bestimmten Ausrichtungen von Händen und/oder Armen und/oder Beinen entsprechen können, zu erfassen bzw. zu erkennen.

Alternativ oder zusätzlich kann der/ein mobiler Elektronikbaustein auch in einen Schuh oder in eine Kopfbedeckung wie beispielsweise Helm oder Mütze integriert sein.

Alternativ oder zusätzlich zu einem solchen in ein Kleidungsstück integrierten Elektronikbaustein kann auch ein mobiler Elektronikbaustein vorgesehen sein, der in ein am Körper tragbares Accessoire- bzw. Funktionsteil des persönlichen Bedarfs integriert ist, insbesondere in eine Uhr oder in eine Brille.

Beispielsweise kann der genannte Elektronikbaustein in eine Smartwatch integriert sein, die über den genannten Elektronikbaustein mit der Steuerungsvorrichtung der Baumaschine kommunizieren kann, insbesondere Steuerbefehle an einen Steuerungsrechner übermitteln und/oder Steuerungsdaten von dem Steuerungsrechner her kommend anzeigen kann. Insbesondere kann auf dem Display einer solchen Smartwatch auch ein Bild aus der Umgebung der Baumaschine angezeigt werden, das beispielsweise von einer Laufkatzenkamera, einer Kameradrohne oder einer anderen bildgebenden Sensorik bereitgestellt wird.

Alternativ oder zusätzlich zu einer solchen Smartwatch kann auch ein Projektions-Armband Verwendung finden, das relevante Informationen direkt auf den Unterarm projizieren kann und/oder mit Hilfe einer speziellen Sensorik Benutzereingaben, beispielsweise Fingerkuppenbewegungen im projizierten Bild nach Art eines Touchscreens erfassen kann.

Alternativ oder zusätzlich kann der Elektronikbaustein in eine Datenbrille integriert sein, die der Maschinenbediener auf der Nase bzw. vor den Augen trägt, wobei Steuerungsdaten auf der Datenbrille angezeigt werden können. Die Datenbrille kann hierzu beispielsweise ein Head-up-Display besitzen, das Informationen auf zumindest ein Brillenglas projiziert und/oder ein transparentes Bildschirmglas besitzen, auf dem beispielsweise nach dem Flüssigkristallprinzip Informationen darstellbar sind. Gleichzeitig kann die genannte Datenbrille auch eine die Sehfunktion unterstützende Funktion erfüllen, beispielsweise geschliffene optische Gläser umfassen.

Alternativ oder zusätzlich zu einer solchen Datenbrille können auch als Head-up-Display ausgebildete Kontaktlinsen Verwendung finden, die direkt relevante Informationen vor das Auge einblenden können.

Alternativ oder zusätzlich kann der mobile Elektronikbaustein in ein akustisches Head-Set integriert sein, das einen am Ohr positionierbaren Lautsprecher und/oder ein in Mundnähe positionierbares Mikrofon umfassen kann, um Steuerungs- und/oder Betriebsinformationen akustisch ausgeben und/oder Steuerbefehle akustisch eingeben zu können. Die akustisch eingegebenen Steuerbefehle können mittels einer Spracherkennungseinrichtung erfasst und in entsprechende Steuerbefehle umgewandelt werden. Da für das Dirigieren des Funktionselements einer bestimmten Baumaschine, beispielsweise des Lasthakens eines Krans, eine begrenzte Anzahl von Steuerungsbefehlen beispielsweise in der Form "Haken auf", "Haken ab", "Haken vor", "Haken zurück", "Haken links", "Haken rechts" ausreichen, kann eine Spracherkennungseinrichtung auch in einem akustisch ungünstigen Umfeld wie einer Baustelle mit vielen Nebengeräuschen vernünftig arbeiten.

Je nach Funktionalität der Steuervorrichtung der Baumaschine kann der genannte "Wearable"-Baustein grundsätzlich unterschiedlich beschaffen sein. Vorteilhafterweise kann der genannte Baustein optische und/oder akustische und/oder taktile Anzeigemittel umfassen, beispielsweise in Form eines Displays und/oder eines Summers und/oder eines Lautsprechers und/oder eines Vibrationselements.

Sind beispielsweise in einen Schuh und/oder Handschuh integrierte Elektronikbausteine vorgesehen, können Meldungen durch Vibrieren des Schuhs und/oder Vibrieren des Handschuhs gemeldet und/oder zusätzlich auf einem Display angezeigt werden. Alternativ oder zusätzlich kann auch eine akustische Meldung abgegeben werden.

Alternativ oder zusätzlich können Meldungen auf dem Display der Smartwatch angezeigt oder auf der Datenbrille dargestellt werden, wobei auch hier zusätzliche akustische und/oder taktile Meldungen abgebbar sein können.

In vorteilhafter Weiterbildung der Erfindung kann hierbei vorgesehen sein, dass an verschiedenen Körpergliedern tragbare Wearables bzw. Elektronikbausteine verschiedene Steuerungsdaten bzw. verschiedene Informationen anzeigen, so dass der Maschinenbediener intuitiv merkt, welche Steuerungsfunktion dargestellt wird. Beispielsweise kann ein erster Betriebsparameter wie ein drohendes Überschreiten der zulässigen Traglast eines Krans durch Vibrieren der Schuhe angezeigt werden und ein zweiter Betriebsparameter wie beispielsweise ein Anfahren einer Arbeitsbereichsgrenze durch ein Vibrieren eines Handschuhs angezeigt werden und ein dritter Betriebsparameter wie das Erreichen einer SollPosition eines Betonkübels für das Betonieren durch Summen der Smartwatch angezeigt werden. Vorteilhafterweise können verschiedenen Betriebsparametern und/oder verschiedenen Maschinenfunktionen jeweils separate Elektronikbausteine und/oder Anzeigemodi an verschiedenen Kleidungsstücken und/oder an verschiedenen Körpergliedern zugeordnet sein.

Alternativ oder zusätzlich können verschiedenen Betriebsparametern und/oder verschiedenen Steuerungsfunktionen der Baumaschine verschiedene Anzeigemodi desselben Elektronikbausteins zugeordnet sein. Beispielsweise kann eine Überladung durch ein Vibrieren der Handschuhe angezeigt werden und das Erreichen einer Arbeitsbereichsgrenze durch das Aufleuchten von LEDs am Handschuh angezeigt werden. Die genannten verschiedenen Anzeigesignale können dabei auch an verschiedenen Elektronikbausteinen und/oder an verschiedenen Abschnitten der Funktionskleidung angezeigt werden, beispielsweise das vorgenannte Überladen durch Vibrieren der Schuhe und das Erreichen einer Arbeitsbereichsgrenze durch Aufleuchten der Handschuhe.

Zur Eingabe von Steuerbefehlen kann der zumindest eine Elektronikbaustein grundsätzlich verschiedene Eingabemittel besitzen. Beispielsweise kann ein Touchscreen vorgesehen sein, das durch Berühren Eingabesignale erzeugen kann, wobei ein solches Touchscreen vorteilhafterweise eine Menüsteuerung und/oder ein Tastaturfeld nach Art eines Keyboards anzeigen kann, um Schreibbefehle eingeben zu können. Alternativ oder zusätzlich können als Eingabemittel Druck- oder Stellschalter beispielsweise in Form von Schiebeschaltern, Druckknöpfen oder Kipphebeln vorgesehen sein, beispielsweise in Form von Druckknöpfen an einer Smartwatch.

Alternativ oder zusätzlich kann als Eingabemittel auch ein Piezoelement in das am Körper tragbare Funktionsteil integriert sein, beispielsweise in Form einer Piezomembran, die in einen Abschnitt eines Kleidungsstücks eingenäht, eingewebt oder in anderer Weise integriert ist. Beispielsweise kann im Bereich eines Fingers eines Fingerhandschuhs ein solches Piezoelement integriert sein, so dass durch Abknicken des Fingers und damit Verformen des Piezoelements ein entsprechendes Stellsignal eingebbar ist.

Alternativ oder zusätzlich kann ein solches Piezoelement beispielsweise in die Sohle eines Schuhs integriert sein, so dass beispielsweise durch kräftiges Aufstampfen auf den Boden ein Stellsignal erzeugbar ist.

Die Erfindung wird nachfolgend anhand eines bevorzugten Ausführungsbeispiels und einer zugehörigen Zeichnung näher erläutert. In der Zeichnung zeigt:
- Fig. 1:: eine schematische Darstellung einer Baumaschine in Form eines Turmdrehkrans, dessen Lasthaken ein Funktionselement der Baumaschine bildet,
- Fig. 2:: eine schematische Darstellung eines Verfahr-Steuer-Moduls, das an den zu dirigierenden Lasthaken des Krans aus Fig. 1 oder ein daran aufgenommenes Bauteil andockbar ist,
- Fig. 3:: eine schematische Darstellung eines an die Steuervorrichtung des Krans angebundenen mobilen Elektronikbausteins in Form einer Smartwatch,
- Fig. 4:: eine schematische Darstellung eines an die Steuervorrichtung des Krans angebundenen mobilen Elektronikbausteins in Form eines am Handgelenk anbringbaren Tablets,
- Fig. 5:: eine schematische Darstellung eines an die Steuervorrichtung des Krans angebundenen mobilen Elektronikbausteins in Form eines ProjektionsArmbands, das ein Bild auf einen Unterarm projizieren kann,
- Fig. 6:: eine schematische Darstellung eines an die Steuervorrichtung des Krans angebundenen mobilen Elektronikbausteins in Form eines Head-up-Displays,
- Fig. 7:: eine schematische Darstellung eines an die Steuervorrichtung des Krans angebundenen mobilen Elektronikbausteins in Form einer Datenbrille,
- Fig. 8:: eine schematische Darstellung eines an die Steuervorrichtung des Krans angebundenen mobilen Elektronikbausteins in Form einer als Head-up-Display ausgebildeten Kontaktlinse,
- Fig. 9:: eine schematische Darstellung des manuellen Dirigierens eines am Lasthaken des Krans aus Fig. 1 aufgenommenen Betonkübels mittels Handschuhe, in die Sensoren integriert sind, und
- Fig. 10:: eine schematische Darstellung verschiedener elektronischer Bausteine in Form von Wearables, mittels derer verschiedene Optionen des Krans aus Fig. 1 gesteuert und/oder überwacht werden können.

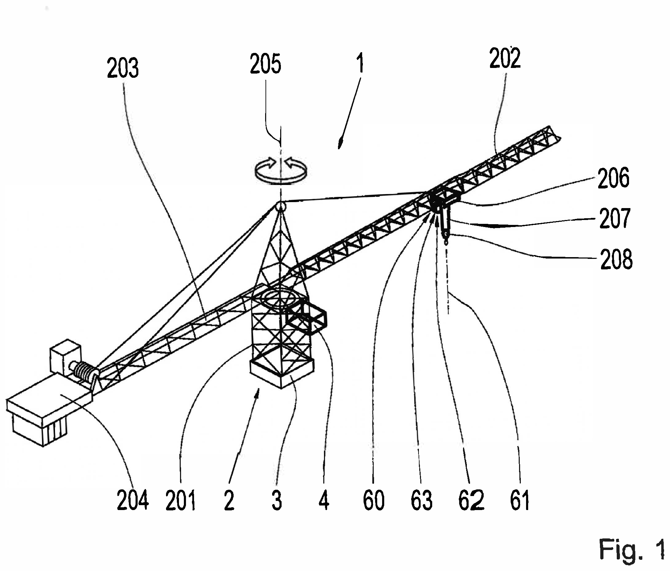

Wie Fig. 1 zeigt, kann die Baumaschine 2 als Kran, beispielsweise Turmdrehkran, Teleskopauslegerkran, Hafenkran oder Offshore-Kran, ausgebildet sein. Der in Fig. 1 gezeigte Turmdrehkran kann beispielsweise in an sich bekannter Weise einen Turm 201 aufweisen, der einen Ausleger 202 trägt, der von einem Gegenausleger 203 ausbalanciert wird, an dem ein Gegengewicht 204 vorgesehen ist. Der genannte Ausleger 202 kann zusammen mit dem Gegenausleger 203 um eine aufrechte Drehachse 205, die koaxial zur Turmachse sein kann, durch ein Drehwerk verdreht werden. An dem Ausleger 202 kann eine Laufkatze 206 durch einen Katzantrieb verfahren werden, wobei von der Laufkatze 206 ein Hubseil 207 abläuft, an dem ein Lasthaken 208 befestigt ist.

Wie Fig. 1 ebenfalls zeigt, kann die Baumaschinen 2 dabei eine elektronische Steuervorrichtung 3 aufweisen, die beispielsweise einen an der Baumaschine selbst angeordneten Steuerungsrechner umfassen kann. Die genannte Steuervorrichtung 3 kann hierbei verschiedene Stellglieder, Hydraulikkreise, Elektromotoren, Antriebsvorrichtungen und andere Arbeitsaggregate an der jeweiligen Baumaschine ansteuern. Dies können beispielsweise bei dem gezeigten Kran dessen Hubwerk, dessen Drehwerk, dessen Katzantrieb, dessen -ggf. vorhandener - Ausleger-Wippantrieb oder dergleichen sein.

Die genannte elektronische Steuervorrichtung 3 kann hierbei mit einem Endgerät 4 kommunizieren, das am Steuerstand bzw. in der Führerkabine angeordnet sein kann und beispielsweise die Form eines Tablets mit Touchscreen und/oder Joysticks aufweisen kann, so dass einerseits verschiedene Informationen vom Steuerungsrechner 3 an dem Endgerät 4 angezeigt und umgekehrt Steuerbefehle über das Endgerät 4 in die Steuervorrichtung 3 eingegeben werden können.

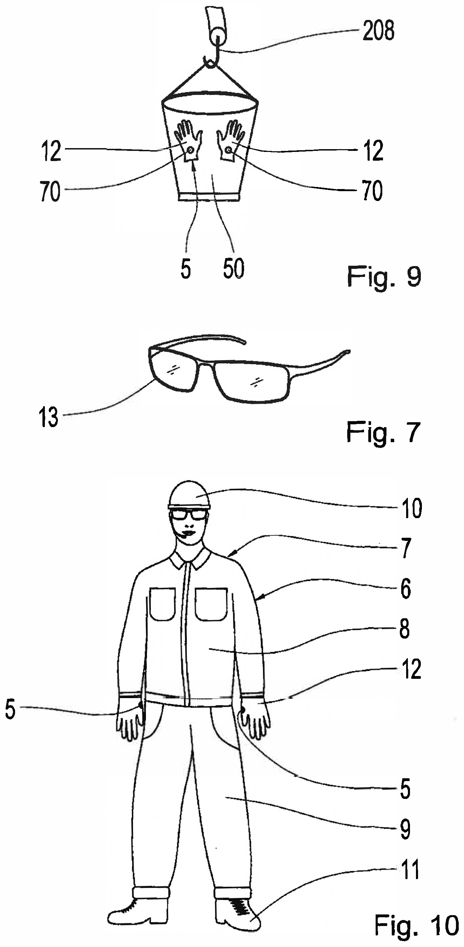

Die genannte Steuervorrichtung 3 des Krans 1 kann insbesondere dazu ausgebildet sein, die genannten Antriebsvorrichtungen des Hubwerks, der Laufkatze und des Drehwerks auch dann anzusteuern, wenn der Lasthaken 208 und/oder ein daran aufgenommenes Bauteil wie beispielsweise der in Fig. 9 gezeigte Betonkübel 50 händisch von einem Maschinenbediener manipuliert, d.h. in eine Richtung gedrückt oder gezogen und/oder verdreht wird bzw. dies versucht wird, um ein händisches Feindirigieren der Lasthaken- und damit Betonkübelposition beispielsweise beim Betonieren zu ermöglichen.

Hierzu kann der Kran 1 eine Erfassungseinrichtung 60 aufweisen, die einen Schrägzug des Hubseils 207 und/oder Auslenkungen des Lasthakens 208 gegenüber einer Vertikalen 61, die durch den Aufhängungspunkt des Lasthakens 208, d.h. die Laufkatze 206 geht, erfasst.

Die hierzu vorgesehenen Bestimmungsmittel 62 der Erfassungseinrichtung 60 können beispielsweise optisch arbeiten, um die genannte Auslenkung zu bestimmen. Insbesondere kann an der Laufkatze 206 eine Kamera 63 oder eine andere bildgebende Sensorik angebracht sein, die von der Laufkatze 206 senkrecht nach unten blickt, so dass bei unausgelenktem Lasthaken 208 dessen Bildwiedergabe im Zentrum des von der Kamera 63 bereitgestellten Bilds liegt. Wird indes der Lasthaken 208 gegenüber der Vertikalen 61 ausgelenkt, beispielsweise durch händisches Drücken oder Ziehen am Lasthaken 208 bzw. dem in Fig. 9 gezeigten Betonkübel 50, wandert die Bildwiedergabe des Lasthakens 208 aus dem Zentrum des Kamerabilds heraus, was durch eine Bildauswerteeinrichtung 64 bestimmt werden kann.

In Abhängigkeit der erfassten Auslenkung gegenüber der Vertikalen 61, insbesondere unter Berücksichtigung der Richtung und Größe der Auslenkung, kann die Steuervorrichtung 3 den Drehwerksantrieb und den Laufkatzenantrieb ansteuern, um die Laufkatze 206 wieder mehr oder minder exakt über den Lasthaken 208 zu bringen, d.h. die Steuervorrichtung 3 steuert die Antriebsvorrichtungen des Krans 1 derart an, dass der Schrägzug bzw. die erfasste Auslenkung möglichst kompensiert wird. Hierdurch kann ein intuitives, einfaches Dirigieren und feines Einstellen der Position des Lasthakens und einer daran aufgenommenen Last erreicht werden.

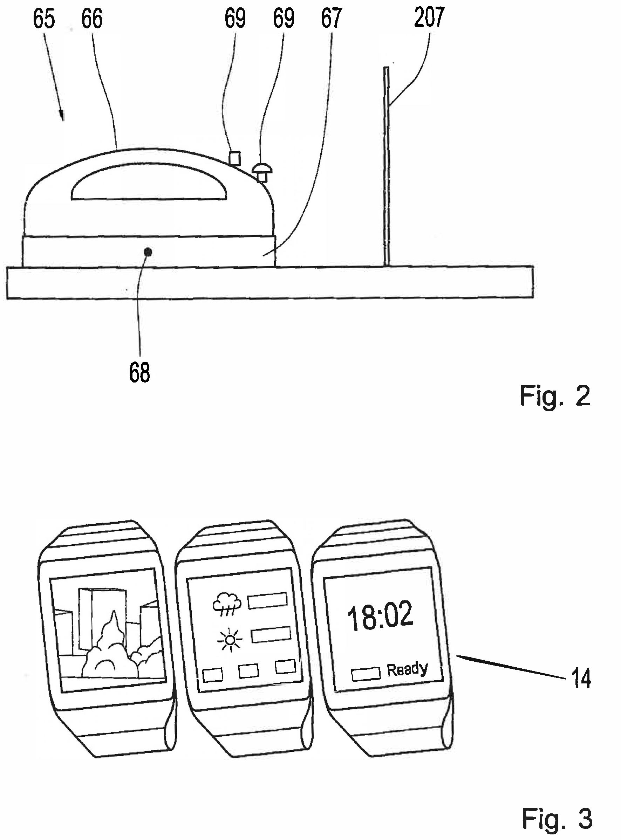

Alternativ oder zusätzlich kann die genannte Erfassungseinrichtung 60 auch ein Verfahr-Steuer-Modul 65 umfassen, das mobil ausgebildet und an den Lasthaken 208 und/oder eine daran angeschlagene Last andockbar ausgebildet sein kann. Wie Fig. 2 zeigt, kann ein solches Verfahr-Steuer-Modul 65 beispielsweise einen Haltegriff 66 umfassen, der mittels geeigneter Haltemittel 67 vorzugsweise lösbar an dem Lastaufnahmemittel 208 und/oder einem daran angelenkten Bauteil wie beispielsweise dem Betonkübel 50 der Fig. 9 befestigt werden kann. Die genannten Haltemittel 67 können beispielsweise Magnethalter, Saugnäpfe, Rasthalter, Bajonettverschlusshalter oder ähnliches umfassen.

Dem genannten Haltegriff 66 können Kraft- und/oder Momentensensoren 68 und ggf. bei einer möglichen beweglichen Lagerung oder Ausbildung des Haltegriffs 66 auch Bewegungssensoren zugeordnet sein, mittels derer auf den Haltegriff 66 ausgeübte Kräfte und/oder Momente und/oder Bewegungen erfasst werden können. Die dem Haltegriff 66 zugeordnete Sensorik ist dabei vorteilhafterweise derart ausgebildet, dass die Kräfte und/oder Momente und/oder Bewegungen hinsichtlich ihrer Wirkrichtung und/oder betragsmäßigen Größe erfasst werden können.

Anhand der am Haltegriff 66 ausgeübten Manipulationskräfte und/oder -momente und/oder -bewegungen, die von der Erfassungseinrichtung 60 erfasst werden, kann die Steuervorrichtung 3 die Antriebseinrichtungen des Krans 1 derart ansteuern, dass die erfassten händischen Manipulationen in motorische Kranstellbewegungen umgesetzt werden, wie dies eingangs näher erläutert wurde.

Alternativ oder zusätzlich zu dem genannten Haltegriff 66 kann das Verfahr-Steuer-Modul 65 auch andere Bedienelemente 69 umfassen, beispielsweise einen verkipp- und/oder verdrehbaren Joystick, ein Touchscreen, auf dem Wischbewegungen und/oder das Niederdrücken angezeigter Bewegungssymbole wie Pfeile und dergleichen erfasst werden, und/oder Schiebeschalter und/oder Drucktasten und/oder Kipphebel und ähnliches. Wie eingangs erläutert, sind die Betätigungsachsen des zumindest einen Bedienelements 69 mit den Bewegungsachsen des Krans 1 verknüpft, um eine intuitive Bedienung des Krans zu ermöglichen, beispielsweise dergestalt, dass nach oben gehende händische Bedienbewegungen den Kranhaken nach oben fahren, nach links gerichtete Manipulationsaktionen den Kranhaken nach links verfahren etc.

Ist das Verfahr-Steuer-Modul 65 lösbar an dem Kranhaken 208 und/oder dem daran angebrachten Bauteil angedockt, kann durch Ausbildung der Andockmittel bzw. der vorgenannten Haltemittel 67 und/oder durch Vorgabe einer Andockposition beispielsweise durch entsprechende Markierungen sichergestellt werden, dass das Verfahr-Steuer-Modul 65 in der korrekten Ausrichtung angedockt wird.

Um zumindest einen Betriebsparameter der Baumaschine steuern und/oder überwachen zu können, kann die genannte Steuervorrichtung 3 ferner mobile Elektronikbausteine 5 in Form von sog. Wearables umfassen, die in Funktionsteile bzw. Anziehsachen- oder Bekleidungs-Teile 6 integriert sind, die bestimmungsgemäß am Körper getragen werden und bestimmungsgemäß von selbst am Körper ohne aktives Greifen oder Balancieren halten. Die genannten Funktionsteile können hierbei ein Bekleidungsstück 7 wie beispielsweise eine Jacke 8 oder eine Hose 9 sein, die an den Körper formangepasst sind und durch ihre Formanpassung selbsttragend am Körper halten, vgl. Fig. 10. In an sich bekannter Weise können hierbei Hilfsmittel wie Gürtel, Hosenträger, Reißverschlüsse und dergleichen verwendet werden.

Alternativ oder zusätzlich können die Bekleidungsteile, in die ein Elektronikbaustein 5 integriert ist, auch eine Kopfbedeckung 10 wie beispielsweise ein Stirnband, eine Mütze oder einen Helm umfassen, und/oder auch Schuhe 11, ggf. auch in Form von Stiefeln, und/oder Handschuhe 12 aufweisen.

Wie Fig. 9 zeigt, können beispielsweise solche Handschuhe 12 mit darin integrierten Elektronikbausteinen 5 dazu genutzt werden, in ähnlicher Weise wie zuvor beschrieben die Position des Lasthakens 208 des Krans 1 bzw. eines daran befestigten Betonkübels 50 zu dirigieren bzw. fein zu justieren. Solche Handschuhe 12 können beispielsweise druck- und/oder richtungsempfindliche Sensoren 70 umfassen, die in Fingerkuppen oder -spitzen und/oder der Handfläche des jeweiligen Handschuhs 12 integriert sein können.

Werden mit den Handschuhe 12 Oberflächen des zu verfahrenden Bauteils und/oder des Lastaufnahmemittels berührt, kann mittels der genannten Sensoren 70 erfasst werden, in welche Richtung die Handschuhe 12 am Bauteil bzw. Lastaufnahmemittel drücken, ziehen oder drehen, um dann über die Steuervorrichtung 3 des Krans 1 entsprechende Verfahrbewegungen auszuführen. Hierbei können beispielsweise am zu verfahrenden Bauteil Positionsmarkierungen angebracht sein, die die Berührungs- bzw. Greifposition der Handschuhe 12 vorgibt, so dass die Steuervorrichtung 3 - aus der Bauteilausrichtung am Kranhaken 208 - weiß, in welche Richtung die Handschuhe 12 und deren Sensoren 70 arbeiten.

Alternativ oder zusätzlich können den verschiedenen Sensoren 70 der Handschuhe 12 auch verschiedene Funktionen zugeordnet sein, beispielsweise dahingehend, dass einem Handflächensensor des rechten Handschuhs die Funktion "horizontales Verfahren von rechts nach links" zugeordnet ist, während dem Handflächensensor des linken Handschuhs die Funktion "vertikales Verfahren" zugeordnet ist. Um ein Verfahren senkrecht zur Berührungsebene - also senkrecht zur Zeichenebene der Fig. 9 - steuern zu können, kann beispielsweise der Fingersensor des linken Handschuhs ein Heranfahren an den Bediener und ein Fingersensor des rechten Handschuhs ein Wegfahren signalisieren. Andere Belegungen der Sensoren sind selbstverständlich möglich.

Alternativ oder zusätzlich können die Handschuhe 12 auch Beschleunigungssensoren und/oder Gyroskopelemente aufweisen, mittels derer Handbewegungen und deren Richtung erfasst werden können. Hierdurch kann eine Gestensteuerung ermöglicht werden, beispielsweise dahingehend, dass ein Nachoben-Winken mit dem Handschuh in ein Anheben des Lasthakens umgesetzt wird.

Um eine solche Gestensteuerung zu realisieren, kann die vorgenannte Erfassungseinrichtung 60 auch eine Kamera bzw. eine bildgebende Sensorik oder eine andere optische Erfassungseinrichtung aufweisen, mittels derer Handbewegungen oder andere Körpergliedbewegungen eines Maschinenbedieners insbesondere unmittelbar in der Nähe des Lasthakens 208 erfasst werden können. Eine solche Kamera kann an verschiedener Stelle angeordnet sein, beispielsweise am Turm 201 und/oder am Ausleger 202 und/oder am Lasthaken 208 und/oder an einer Flugdrohne und/oder an dem zuvor genannten Verfahr-Steuer-Modul 65, welches an dem zu dirigierenden Bauteil andockbar ist. Eine Bildverarbeitung kann die erfassten Bewegungen des Maschinenbedieners auswerten, woraus dann die Steuervorrichtung 3 dem Kran 1 Fahrbefehle geben kann. Die Bildauswerteeinrichtung kann hierbei insbesondere derart ausgebildet sein, dass die in der DIN 33409 definierten Handzeichen in dem von der Kamera bereitgestellten Bild erfasst werden bzw. bestimmt werden können. Solche in der genannten DIN-Norm definierten Handzeichen sind beispielsweise das Heben des rechten Arms zum Anzeigen, dass nachfolgend Handzeichen gegeben werden, oder das seitwärts waagrechte Ausstrecken beider Arme, das als Stop-Signal zum Stoppen der Kranbewegungen und/oder Beenden eines Bewegungsablaufs interpretiert wird, oder ein leichtes Auf- und Abwippen der Handfläche bei waagrecht ausgestrecktem Unterarm, um das Einleiten einer langsamen Abwärtsbewegung anzuzeigen.

Alternativ oder zusätzlich zu solchen Bekleidungsstücken kann ein Elektronikbaustein auch in ein persönliches Accessoire, das bestimmungsgemäß am Körper getragen wird und eine Schmuckfunktion und/oder weitere persönliche Zusatzfunktionen wie Sehhilfe und dergleichen erfüllen kann, integriert sein. Wie Fig. 3 oder 7 zeigt, kann ein solches persönliches Accessoireteil eine Datenbrille 13, eine Uhr 14, ein Fingerring, ein Armreif oder ein Gürtel und dergleichen sein, in die bzw. in den ein Elektronikbaustein 5 zum Steuern und/oder Überwachen der Baumaschine 2 integriert ist.

Dabei zeigt Fig. 3 eine Uhr 14 in Form einer Smartwatch, die ein Display aufweist, auf dem verschiedenen Informationen betreffend den Baumaschinenbetrieb angezeigt werden können. Gegebenenfalls können die genannten Smartwatches auch ein Touchscreen aufweisen, mittels dessen Steuerbefehle an die Steuervorrichtung der Baumaschine eingegeben werden können.

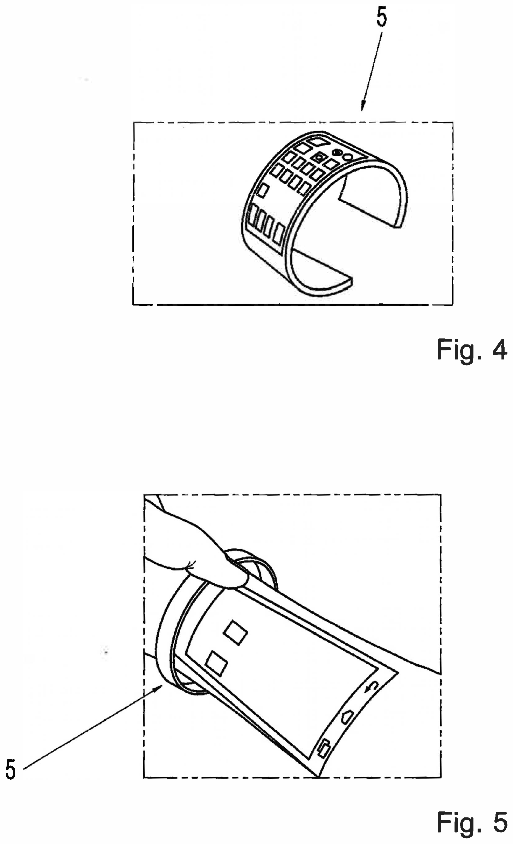

Wie Fig. 4 zeigt, kann der mobile Elektronikbaustein 5 auch ein Tablet sein, das mittels einer armband- bzw. armringähnlichen Halteeinrichtung an einem Handgelenk befestigbar ist und dabei auch selbst ein gekrümmtes Display besitzen kann, das ansonsten aber nach Art eines herkömmlichen Tablets arbeiten kann, also auch mittels einer Touchscreen-Funktion Steuerbefehle erzeugen kann.

Fig. 5 zeigt einen mobilen Elektronikbaustein 5 in Form eines Projektionsarmbands, das ein Bild auf einen Unterarm projizieren kann. Auch hier kann eine Erfassungsfunktion vorgesehen sein, die eine Fingerkuppe oder Ähnliches im Bereich des projizierten Bilds erfassen kann, um Steuerbefehle einzugeben.

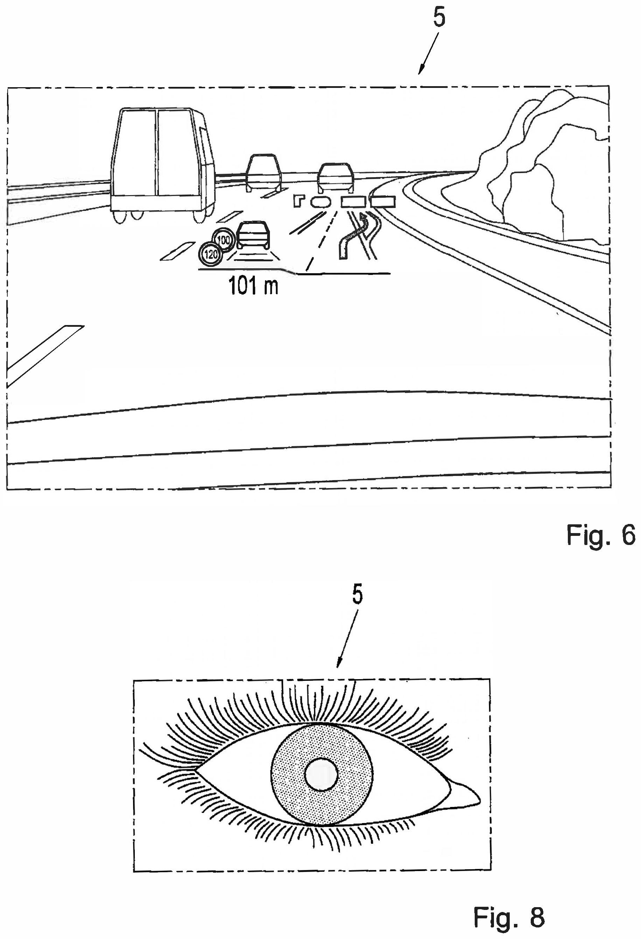

Wie Fig. 6 zeigt, kann beispielsweise die Datenbrille 13, die in Fig. 7 dargestellt ist, auch nach Art eines Head-up-Displays arbeiten, bei dem in eine transparente Sichtscheibe bzw. ein Glas oder einen transparenten Kunststoffkorpus ergänzende Informationen eingeblendet werden können, wodurch eine angereicherte Realität im Sinne einer Augmented Reality erzeugt werden kann.

Wie Fig. 8 zeigt, kann ein solcher mobiler Elektronikbaustein 5, der in Form eines Head-up-Displays ausgebildet ist und arbeitet, auch als Kontaktlinse ausgebildet sein.

Wie zuvor erläutert, können dabei die genannten Elektronikbausteine 5 verschiedenen Betriebsparametern und/oder Steuerungsfunktionen einer Baumaschine 2 zugeordnet sein, so dass an verschiedenen Körpergliedern verschiedene Betriebsparameter überwacht und/oder gesteuert werden können. Beispielsweise kann mit einem Elektronikbaustein 5 im rechten Handschuh 12 das Hubwerk des Krans gesteuert und/oder überwacht werden, während beispielsweise mit einem Elektronikbaustein 5 im linken Handschuh die Laufkatze des Krans 2 gesteuert bzw. überwacht werden kann.

Vorteilhafterweise können die mobil und/oder in Form von Wearables ausgebildeten Elektronikbausteine 5 mit der jeweiligen Baumaschine 2 drahtlos kommunizieren. Dies kann beispielsweise über Bluetooth erfolgen, wobei hier die Steuervorrichtung 3 an der Baumaschine 2 einen Bluetooth-Adapter 7 beispielsweise an der Lasthakenflasche aufweisen kann, über den der jeweilige Elektronikbaustein 5 an die Steuervorrichtung 3 anbindbar ist. Analog umfasst der jeweilige Elektronikbaustein 5 ebenfalls eine Bluetooth-Sende- und/oder - Empfangseinrichtung.

Die Datenkommunikation zwischen den Elektronikbausteinen 5 und dem Steuerrechner 3 der Baumaschine 2 ist hierbei vorteilhafterweise bidirektional, so dass sowohl überwachte Betriebsparameter an dem Elektronikbaustein 5 angezeigt werden können und Steuerbefehle am Elektronikbaustein 5 eingegeben werden können.

Die Elektronikbausteine 5 können hierbei in der eingangs beschriebenen Weise ausgebildete Eingabemittel zum Eingeben von Steuerbefehlen und Anzeigemittel zum Anzeigen von Steuerungsdaten und/oder überwachten Betriebsparametern aufweisen, wie ebenfalls eingangs beschrieben.

Wie sich aus obiger Beschreibung ergibt, betrifft die vorliegende Erfindung somit folgende Aspekte:
1. Baumaschine, insbesondere Kran, mit einer elektronischen Steuervorrichtung (3) zum Steuern und/oder Erfassen von Betriebsparametern sowie zumindest einer Antriebseinrichtung zum Bewegen eines Funktionselements, insbesondere Lastaufnahmemittels (208), dadurch gekennzeichnet, dass eine Erfassungseinrichtung (60) zum Erfassen von händisch ausgeführten Manipulationskräften und/oder - bewegungen, die auf das Funktionselement ausgeübt und/oder an dem Funktionselement ausgeführt werden, vorgesehen ist, wobei die Steuervorrichtung (3) dazu ausgebildet ist, die zumindest eine Antriebseinrichtung in Abhängigkeit der erfaßten Manipulationskraft und/oder -bewegung anzusteuern.
2. Baumaschine nach dem vorhergehenden Aspekt, wobei das Funktionselement pendelnd aufgehängt ist, insbesondere ein an einem Hubseil (207) befestigtes Lastaufnahmemittel (208) eines Krans oder Baggerwerkzeug eines Seilbaggers ist, wobei die Erfassungseinrichtung (60) Bestimmungsmittel (62) zum Bestimmen einer Auslenkung des pendelnd aufgehängten Funktionselements gegenüber einer Vertikalen (61) durch den Aufhängungspunkt aufweist und die Steuervorrichtung (3) dazu ausgebildet ist, die zumindest eine Antriebseinrichtung in Abhängigkeit der erfaßten Auslenkung anzusteuern, insbesondere derart, dass die erfaßte Auslenkung kompensiert wird.
3. Baumaschine nach dem vorhergehenden Aspekt, wobei die Erfassungsmittel (62) einen bildgebenden Sensor, insbesondere Kamera (63), dessen/deren Blickachse durch den Aufhängungspunkt senkrecht nach unten geht, sowie eine Bildauswerteeinrichtung zum Bestimmen des Schrägzugs und/oder der Auslenkung des Funktionselements gegenüber der Vertikalen (61) durch den Aufhängungspunkt vorgesehen ist.
4. Baumaschine nach einem der vorhergehenden Aspekte, wobei die Erfassungseinrichtung (60) ein Verfahr-Steuer-Modul (65), das am Funktionselement der Baumaschine und/oder an einem daran aufgenommenen, zu verfahrenden Bauteil positionierbar ist, aufweist, welches zumindest ein Bedienelement (69) zum Eingeben von Steuerungsbefehlen aufweist, in Abhängigkeit derer das Funktionselement von der Steuereinrichtung verfahrbar ist.
5. Baumaschine nach dem vorhergehenden Aspekt, wobei die Betätigungsachse des zumindest einen Bedienelements (69) mit einer Verfahrachse des Funktionselements der Baumaschine zusammenfällt.
6. Baumaschine nach einem der beiden vorhergehenden Aspekte, wobei das Bedienelement des Verfahr-Steuer-Moduls (65) zumindest einen Kraft- und/oder Momenten- und/oder Wegsensor zum Erfassen einer Kraft und/oder eines Moments und/oder eines Stellwegs eines Handgriffs (66) des Verfahr-Steuer-Moduls (65) aufweist.
7. Baumaschine nach einem der drei vorhergehenden Aspekte, wobei das Verfahr-Steuer-Modul (65) als Bedienelement (69) einen verkipp- und/oder verdrehbaren Joystick aufweist.
8. Baumaschine nach einem der vorhergehenden Aspekte, wobei die Erfassungseinrichtung (60) eine Gestenerfassungsvorrichtung zum Erfassen von Gesten und Erzeugen von Steuerbefehlen in Abhängigkeit der erfassten Gesten aufweist, wobei die genannte Gestenerfassungsvorrichtung vorzugsweise einen bildgebenden Sensor, insbesondere eine Kamera, und eine nachgeordnete Bildauswerteeinrichtung umfasst.
9. Baumaschine nach einem der vorhergehenden Aspekte, wobei die Erfassungseinrichtung (60) eine Spracherkennungseinrichtung zum Erkennen von gesprochenen Steuerbefehlen aufweist, wobei die Steuervorrichtung (3) dazu ausgebildet ist, erfasste Sprachbefehle in Steuerbefehle für die zumindest eine Antriebseinrichtung umzusetzen.
10. Baumaschine nach einem der vorhergehenden Aspekte wobei die Erfassungseinrichtung (60) ein optisches Erfassungsmittel zum Erfassen eines Laserlichtpunkts aufweist, der von einem Laserpointer abgebbar ist und einen Zielpunkt für das Verfahren des Funktionselements markiert, wobei die Steuervorrichtung (3) dazu ausgebildet ist, die zumindest eine Antriebseinrichtung in Abhängigkeit des erfassten Laserlichtpunkts anzusteuern.
11. Baumaschine nach einem der vorhergehenden Aspekte, wobei die Steuervorrichtung (3) zumindest einen mobilen Elektronikbaustein (5) umfasst, welcher zumindest einen Beschleunigungssensor enthält, wobei die Steuervorrichtung (3) dazu ausgebildet ist, die zumindest eine Antriebseinrichtung in Abhängigkeit einer durch den Beschleunigungssensor erfassten Beschleunigung des mobilen Elektronikbausteins (5) anzusteuern, wobei der genannte mobile Elektronikbaustein (5) vorzugsweise in einer Hand und/oder an einem Körperglied tragbar ausgebildet ist.
12. Baumaschine nach dem Oberbegriff des Aspekts 1 oder einem der vorhergehenden Aspekte, wobei die Steuervorrichtung (3) einen mobilen Elektronikbaustein (5) zum Anzeigen und/oder Eingeben von Steuerungsdaten aufweist, der in ein bestimmungsgemäß am Körper des Maschinenbedieners zu tragendes Anziehteil (6) integriert ist, das selbsthaltend an einem Körperglied anziehbar ist.
13. Baumaschine nach dem vorhergehenden Aspekt, wobei der mobile Elektronikbaustein (5) in ein Kleidungsstück, insbesondere einen Handschuh (12) integriert ist, insbesondere eingewebt und/oder eingenäht ist und/oder einen festen Bestandteil des genannten Kleidungsstücks bildet.
14. Baumaschine nach einem der vorhergehenden Aspekte, wobei die Eingabemittel des zumindest einen Elektronikbausteins (5) ein in ein Kleidungsstück integriertes Piezoelement aufweisen.
15. Baumaschine nach einem der vorhergehenden Aspekte, wobei die Eingabemittel des zumindest einen Elektronikbausteins (5) einen Beschleunigungs- und/oder Raumwinkelsensor umfassen und dazu ausgebildet sind, Steuerbefehle in Abhängigkeit von bestimmten Beschleunigungen und/oder Raumausrichtungen, insbesondere durch eine bestimmte Beschleunigung in einer bestimmten Raumausrichtung im Sinne einer Gestensteuerung zu erzeugen.
16. Baumaschine nach dem vorhergehenden Aspekt, wobei die Eingabemittel des zumindest einen Elektronikbausteins (5) ein Hub-/Senkmodul zum Erzeugen eines Steuerbefehls zum Anheben des Funktionselements, insbesondere Kranhakens, bei Erfassen einer aufwärts gerichteten Bewegung des Beschleunigungs- und/oder Ausrichtungssensors, die eine vorbestimmte Beschleunigung und/oder Geschwindigkeit erreicht und/oder überschreitet, und zum Erzeugen eines Steuerbefehls zum Absenken des Funktionselements bei Erfassen einer abwärts gerichteten Bewegung, die eine vorbestimmte Beschleunigung und/oder Geschwindigkeit erreicht und/oder überschreitet.
17. Baumaschine nach einem der vorhergehenden Aspekte, wobei verschiedenen Betriebsparametern und/oder verschiedenen Steuerungsfunktionen zugeordnete Elektronikbausteine (5) in verschiedene Funktionsteile (6) und/oder verschiedene Abschnitte eines Funktionsteils (6) integriert sind, die bestimmungsgemäß an verschiedenen Körpergliedern des Maschinenbedieners anziehbar sind, so dass an einem ersten Körperglied ein erster Betriebsparameter und/oder eine erste Steuerungsfunktion überwachbar und/oder steuerbar ist und an einem zweiten Körperglied ein zweiter Betriebsparameter und/oder eine zweite Steuerungsfunktion überwachbar und/oder steuerbar ist.
18. Baumaschine nach einem der vorhergehenden Aspekte, wobei der zumindest eine Elektronikbaustein (5) in eine Datenbrille (13) integriert ist.
19. Baumaschine nach einem der vorhergehenden Aspekte, wobei der zumindest eine Elektronikbaustein (5) in eine Armbanduhr (14) integriert ist.
20. Baumaschine nach einem der vorhergehenden Aspekte, wobei der zumindest eine Elektronikbaustein (5) in ein Projektions-Armband integriert ist.
21. Baumaschine nach einem der vorhergehenden Aspekte, wobei der zumindest eine Elektronikbaustein (5) in ein Tablet integriert ist, welches mittels eines Armbands und/oder -reifs am Handgelenk tragbar ist.
22. Baumaschine nach einem der vorhergehenden Aspekte, wobei der zumindest eine Elektronikbaustein (5) ein Head-up-Display umfasst.
23. Baumaschine nach dem vorhergehenden Aspekt, wobei das Head-up-Display einer Datenbrille (13) und/oder einer Kontaktlinse zugeordnet ist.
24. Baumaschine nach einem der vorhergehenden Aspekte, wobei der zumindest eine Elektronikbaustein (5) Anzeigemittel zum Anzeigen von Steuerdaten und/oder Betriebsparametern aufweist, wobei die Anzeigemittel eine optische Anzeigeeinrichtung und/oder eine akustische Anzeigeeinrichtung und/oder eine Vibrationsanzeigeeinrichtung, insbesondere ein in ein Kleidungsstück integriertes Piezoelement, umfassen.

## Patentansprüche

1. Baumaschine in Form eines Krans, mit einem Ausleger (202), einer entlang des Auslegers (202) verfahrbaren Laufkatze (206), von der ein Hubseil (207) abläuft, einer elektronischen Steuervorrichtung (3) zum Steuern und/oder Erfassen von Betriebsparametern sowie zumindest einer Antriebseinrichtung zum Bewegen eines pendelnd aufgehängten, an dem Hubseil (207) befestigten Funktionselements in Form eines Lastaufnahmemittels (208) des Krans, **dadurch gekennzeichnet, dass** eine Erfassungseinrichtung (60) zum Erfassen von Manipulationskräften und/oder -bewegungen, die auf das Funktionselement ausgeübt und/oder an dem Funktionselement ausgeführt werden, vorgesehen ist, wobei die Steuervorrichtung (3) dazu ausgebildet ist, die zumindest eine Antriebseinrichtung in Abhängigkeit der erfaßten Manipulationskraft und/oder -bewegung anzusteuern.

2. Baumaschine nach dem vorhergehenden Anspruch, wobei die Erfassungseinrichtung (60) Bestimmungsmittel (62) zum Bestimmen einer Auslenkung des pendelnd aufgehängten Funktionselements gegenüber einer Vertikalen (61) durch den Aufhängungspunkt aufweist und die Steuervorrichtung (3) dazu ausgebildet ist, die zumindest eine Antriebseinrichtung in Abhängigkeit der erfaßten Auslenkung anzusteuern derart, dass die erfaßte Auslenkung kompensiert wird.

3. Baumaschine nach dem vorhergehenden Anspruch, wobei die Erfassungsmittel (62) einen bildgebenden Sensor, insbesondere Kamera (63), dessen/deren Blickachse durch den Aufhängungspunkt senkrecht nach unten geht, sowie eine Bildauswerteeinrichtung zum Bestimmen des Schrägzugs und/oder der Auslenkung des Funktionselements gegenüber der Vertikalen (61) durch den Aufhängungspunkt vorgesehen ist.

4. Baumaschine nach Anspruch 2 oder 3, wobei dem Hubseil (207) ein Neigungssensor zugeordnet ist.

5. Baumaschine nach einem der Ansprüche 2 bis 4, wobei die Steuervorrichtung (3) dazu ausgebildet ist, in Abhängigkeit der erfassten Auslenkung gegenüber der Vertikalen (61), unter Berücksichtigung von Richtung und Größe der Auslenkung, einen Drehwerksantrieb zum Verdrehen des Auslegers (202) um eine aufrechte Achse und einen Laufkatzenantrieb zum Verfahren der Laufkatze (206) entlang des Auslegers (202) so ansteuern, um die Laufkatze (206) wieder zurück über den Lasthaken (208) zu bringen und die erfasste Auslenkung möglichst zu kompensieren.

6. Baumaschine nach einem der vorhergehenden Ansprüche, wobei die Steuervorrichtung dazu ausgebildet ist, bei einem erfaßten Schrägzug des Hubseils (207) oder des daran befestigten Lasthakens (208) in Richtung des Auslegers nach vorne von einem Kranturm weg die Laufkatze (206) am Ausleger weiter nach vorne zu verfahren, um den Schrägzug zu kompensieren, und bei einem erfaßten Schrägzug des Lasthakens (208) oder des Hubseils (207) quer zu einer vertikalen Ebene durch den Ausleger (202) den Drehwerksantrieb zu betätigen, um den Ausleger (202) wieder vertikal über den Lasthaken (208) zu drehen.

7. Baumaschine nach einem der vorhergehenden Ansprüche, wobei an einem Lasthaken (208) oder an einer mit dem Lasthaken (208) verbundenen Umlenkflasche zum Umlenken des Hubseils (207) Bewegungssensoren zum Erfassen von Bewegungen am Lasthaken (208) oder an der Umlenkflasche hinsichtlich ihrer Wirkrichtung und/oder betragsmäßigen Größe angebracht sind und die Steuervorrichtung (3) dazu ausgebildet ist, Antriebseinrichtungen der Baumaschine derart anzusteuern, dass die erfassten Bewegungen am Lasthaken (208) oder an der Umlenkflasche in motorische Kranstellbewegungen umgesetzt werden.

8. Baumaschine nach dem vorhergehenden Anspruch, wobei die Steuervorrichtung (3) dazu ausgebildet ist, die Antriebseinrichtungen umfassend Laufkatzenantrieb und Drehwerksantrieb so anzusteuern, dass die Laufkatze in die am Lasthaken (208) oder an der Umlenkflasche erfasste Bewegungsrichtung bewegt wird und die Geschwindigkeit und Beschleunigung der motorisch erzeugten Antriebsbewegung an die betragsmäßige Größe der am Lasthaken (208) oder an der Umlenkflasche erfaßten Bewegung angepaßt wird.

9. Baumaschine nach einem der vorhergehenden Ansprüche, wobei die Erfassungseinrichtung (60) ein Verfahr-Steuer-Modul (65), das am Funktionselement der Baumaschine und/oder an einem daran aufgenommenen, zu verfahrenden Bauteil positionierbar ist, aufweist, welches zumindest ein Bedienelement (69) zum Eingeben von Steuerungsbefehlen aufweist, in Abhängigkeit derer das Funktionselement von der Steuereinrichtung verfahrbar ist.

10. Baumaschine nach dem vorhergehenden Anspruch, wobei die Betätigungsachse des zumindest einen Bedienelements (69) mit einer Verfahrachse des Funktionselements der Baumaschine zusammenfällt und/oder das Bedienelement des Verfahr-Steuer-Moduls (65) zumindest einen Kraft- und/oder Momenten- und/oder Wegsensor zum Erfassen einer Kraft und/oder eines Moments und/oder eines Stellwegs eines Handgriffs (66) des Verfahr-Steuer-Moduls (65) aufweist, und/oder das Verfahr-Steuer-Modul (65) als Bedienelement (69) einen verkipp- und/oder verdrehbaren Joystick aufweist.

11. Baumaschine nach einem der vorhergehenden Ansprüche, wobei die Steuervorrichtung (3) zumindest einen mobilen Elektronikbaustein (5) umfasst, welcher zumindest einen Beschleunigungssensor enthält, wobei die Steuervorrichtung (3) dazu ausgebildet ist, die zumindest eine Antriebseinrichtung in Abhängigkeit einer durch den Beschleunigungssensor erfassten Beschleunigung des mobilen Elektronikbausteins (5) anzusteuern.

12. Baumaschine nach einem der vorhergehenden Ansprüche, wobei die Eingabemittel des zumindest einen Elektronikbausteins (5) einen Beschleunigungs- und/oder Raumwinkelsensor umfassen und dazu ausgebildet sind, Steuerbefehle in Abhängigkeit von einer bestimmten Beschleunigung in einer bestimmten Raumausrichtung im Sinne einer Gestensteuerung zu erzeugen.

13. Baumaschine nach dem vorhergehenden Anspruch, wobei die Eingabemittel des zumindest einen Elektronikbausteins (5) ein Hub-/Senkmodul zum Erzeugen eines Steuerbefehls zum Anheben des Funktionselements, insbesondere Kranhakens, bei Erfassen einer aufwärts gerichteten Bewegung des Beschleunigungs- und/oder Ausrichtungssensors, die eine vorbestimmte Beschleunigung und/oder Geschwindigkeit erreicht und/oder überschreitet, und zum Erzeugen eines Steuerbefehls zum Absenken des Funktionselements bei Erfassen einer abwärts gerichteten Bewegung, die eine vorbestimmte Beschleunigung und/oder Geschwindigkeit erreicht und/oder überschreitet.

14. Baumaschine nach Anspruch 12 oder 13, wobei die Erfassungseinrichtung (60) eine Gestenerfassungsvorrichtung zum Erfassen von Gesten und Erzeugen von Steuerbefehlen in Abhängigkeit der erfassten Gesten aufweist, wobei die genannte Gestenerfassungsvorrichtung einen bildgebenden Sensor, insbesondere eine Kamera, und eine nachgeordnete Bildauswerteeinrichtung umfasst
